(19)

Europäisches
Patentamt
European
Patent Office
Office européen
des brevets

(11) **EP 4 507 020 A1**

(12) **EUROPEAN PATENT APPLICATION**
published in accordance with Art. 153(4) EPC

(43) Date of publication:
**12.02.2025 Bulletin 2025/07**

(21) Application number: 23792224.0

(22) Date of filing: **20.04.2023**

(51) International Patent Classification (IPC):
$H01M\ 4/131^{(2010.01)}$     $H01M\ 4/525^{(2010.01)}$
$H01M\ 4/505^{(2010.01)}$     $H01M\ 4/58^{(2010.01)}$
$H01M\ 4/62^{(2006.01)}$     $H01M\ 4/04^{(2006.01)}$
$H01M\ 4/1391^{(2010.01)}$     $H01M\ 4/136^{(2010.01)}$
$H01M\ 4/1397^{(2010.01)}$

(52) Cooperative Patent Classification (CPC):
H01M 4/02; H01M 4/04; H01M 4/131; H01M 4/136;
H01M 4/1391; H01M 4/1397; H01M 4/505;
H01M 4/525; H01M 4/58; H01M 4/62;
H01M 10/052; Y02E 60/10

(86) International application number:
**PCT/KR2023/005417**

(87) International publication number:
**WO 2023/204650 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.04.2022 KR 20220049145**

(71) Applicant: **LG Energy Solution, Ltd.
Seoul 07335 (KR)**

(72) Inventors:
• **SHIN, Dong-Mok**
  **Daejeon 34122 (KR)**
• **HAN, Jae-Sung**
  **Daejeon 34122 (KR)**
• **SHIN, Dong-Oh**
  **Daejeon 34122 (KR)**

(74) Representative: **Plasseraud IP
104 Rue de Richelieu
CS92104
75080 Paris Cedex 02 (FR)**

(54) **MIXTURE POWDER FOR DRY ELECTRODE, AND DRY ELECTRODE FOR ELECTROCHEMICAL DEVICE COMPRISING SAME**

(57)     A mixture powder for electrode according to the present disclosure has low tap density and tap compaction ratio, and thus has good flowability and less production of fine powder. Accordingly, it may be possible to prevent contamination of a manufacturing machine by the powder when making a dry electrode film by a roll-to-roll continuous process, thereby improving process efficiency. Additionally, it may be possible to prevent bridging when the mixture powder is put into the machine, thereby reducing the occurrence of pinholes in the dry electrode film. Accordingly, the dry electrode film obtained from the mixture powder for electrode according to the present disclosure has the outstanding mechanical strength such as high tensile strength and elongation at break.

FIG. 5

**EP 4 507 020 A1**

**Description**

TECHNICAL FIELD

The present application claims priority to Korean Patent Application No. 10-2022-0049145 filed on April 20, 2022 in the Republic of Korea, the disclosures of which are incorporated herein by reference. The present disclosure relates to a mixture powder for manufacturing a dry electrode and a dry electrode film comprising the same. The present disclosure further relates to a dry electrode comprising an electrode active material layer derived from the dry electrode film.

BACKGROUND ART

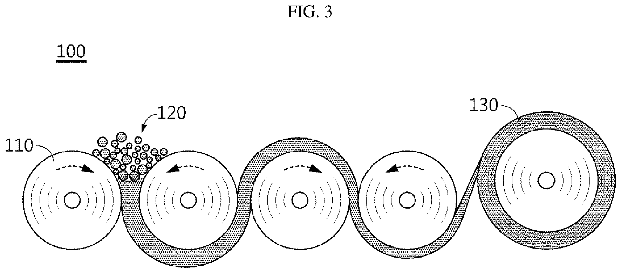

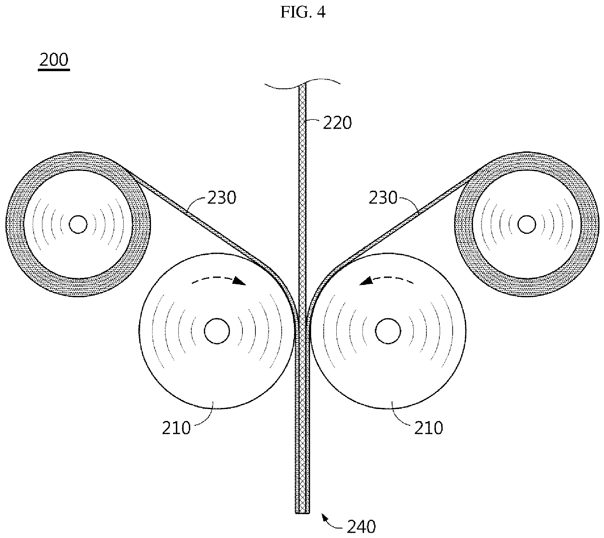

A dry electrode may be manufactured by mixing electrode materials such as an electrode active material, a conductive material, and a binder resin into powder form without using solvents to make a mixture powder for electrode, calendaring to make a free-standing type dry electrode film, and laminating onto a current collector. FIGS. 3 and 4 schematically shows a method for manufacturing a dry electrode film and a dry electrode.

Referring to FIG. 3, the dry electrode film 130 is made by putting the mixture powder for electrode 120 in between two rotary calendaring rollers 110 to compact it, and in this instance, to adjust the film thickness, the loading amount, the porosity or the like, the compaction process is applied multiple times by a roll-to-roll continuous process. During the roll-to-roll continuous process, pinholes may easily occur in the dry electrode film 130, which makes it difficult to increase the manufacturing yield.

In particular, the mechanical properties of the film is too low to perform the roll-to-roll process according to the condition of the electrode mixture powder obtained after kneading and grinding, and bridging caused by powder agglomeration before putting into the rollers may cause pinholes or uncoated regions in the film. Accordingly, there is a need for research of a mixture powder for electrode having sufficient flowability to prevent agglomeration in the manufacture of a dry electrode and for improving the mechanical properties of a dry electrode film and a method for manufacturing the same.

Technical Problem

The present disclosure is directed to providing a mixture powder for electrode with improved flowability and less production of fine powder, thereby preventing contamination of a manufacturing machine when making a dry electrode film by a roll-to-roll continuous process, resulting in improved process efficiency. The present disclosure is further directed to providing a dry electrode film comprising the mixture powder for electrode with less surface defects and high mechanical strength. It is apparent that these and other objectives and advantages of the present disclosure may be realized by the means or methods set forth in the appended claims and a combination thereof.

Technical Solution

A first aspect of the present disclosure relates to a mixture powder for an electrode, and the mixture powder for the electrode comprises an electrode active material and a binder polymer, wherein the binder polymer comprises polytetrafluoroethylene (PTFE) or polyolefin or a combination of two or more thereof, a tap density is equal to or less than 1.80 g/cc, and a tap compaction ratio is less than 45%, and a $D_{10}$ diameter of particles is 35 $\mu$m or more and a $D_{90}$ diameter is 1,700 $\mu$m or less.

According to a second aspect of the present disclosure, in the first aspect, the mixture powder has a Hausner ratio of 1.45 to 1.7.

According to a third aspect of the present disclosure, in the first or second aspect, the electrode active material comprises a lithium transition metal composite oxide represented by the following [Chemical Formula 1]:

[Chemical Formula 1]     $Li_{1+a}(Ni_xCo_yMn_zM1_w)_{1-a}O_{2-b}M2_b$

wherein $-0.1 \leq a \leq 0.3$, $x+y+z+w=1$, $0.3 \leq x < 1.0$, each of y and Z is independently 0 or more and 0.7 or less, $0 \leq w \leq 0.1$, $0 \leq b \leq 0.05$, M1 comprises Al, Mg, Ge, Mo, Nb, Si, Ti, Zr, Cr, W, V or Fe or a combination of two or more thereof, and M2 comprises boron (B), phosphorus (P) or fluorine (F) or a combination of two or more thereof.

According to a fourth aspect of the present disclosure, in the third aspect, the lithium transition metal composite oxide is included in an amount of 50 wt% or more based on 100 wt% of the electrode active material.

According to a fifth aspect of the present disclosure, in any one of the first to fourth aspects, the electrode active material comprises a lithium iron phosphate compound in an amount of 50 wt% or more based on 100 wt% of the electrode active material.

According to a sixth aspect of the present disclosure, in any one of the first to fifth aspects, the binder polymer is fibrillated as a result of applying a shearing stress in whole or in at least part.

According to a seventh aspect of the present disclosure, in any one of the first to sixth aspects, the mixture powder for the electrode has a tap compaction ratio of 42% or less.

According to an eighth aspect of the present disclosure, in any one of the first to seventh aspects, the mixture powder for the electrode has a particle diameter $D_{10}$ of 150 $\mu$m or less.

According to a ninth aspect of the present disclosure, in any one of the first to eighth aspects, the mixture powder for the electrode has a particle diameter $D_{90}$ of 300 $\mu$m or more.

According to a tenth aspect of the present disclosure, in any one of the first to ninth aspects, the mixture powder for the electrode further comprises a conductive material.

An eleventh aspect of the present disclosure relates to a dry electrode film, and the dry electrode comprises the mixture powder for the electrode according to the first to tenth aspects, wherein the mixture powder for the electrode is compacted into a free-standing type sheet shape by pressing.

A twelfth aspect of the present disclosure relates to a dry electrode, and the dry electrode comprises a current collector and a dry electrode film according to the eleventh aspect joined by a lamination process.

A thirteenth aspect of the present disclosure relates to an electrochemical device, and the electrochemical device comprises a negative electrode, a positive electrode, and a separator interposed between the negative electrode and the positive electrode, wherein the negative electrode and/or the positive electrode is the dry electrode according to the twelfth aspect.

A fourteenth aspect of the present disclosure relates to a method for manufacturing the mixture powder for the electrode according to the first to tenth aspects, and the method comprises (S10) mixing electrode materials comprising the electrode active material and the binder polymer, (S20) kneading the mixed electrode materials, and (S30) grinding a result of the step (S20).

A fifteenth aspect of the present disclosure relates to a method for manufacturing a dry electrode, and the method comprises (S40) compacting the mixture powder for the electrode obtained in the fourteenth aspect into a shape so as to form a free-standing type dry electrode film and (S50) joining the film and the current collector.

Advantageous Effects

The mixture powder for electrode according to the present disclosure has low tap density and tap compaction ratio, and thus has good flowability and less production of fine powder. Accordingly, it may be possible to prevent contamination of the manufacturing machine by the powder when making the dry electrode film by the roll-to-roll continuous process, thereby improving process efficiency. Additionally, it may be possible to prevent bridging when the mixture powder is put into the machine, thereby reducing the occurrence of pinholes in the dry electrode film. Accordingly, the dry electrode film obtained from the mixture powder for electrode according to the present disclosure has the outstanding mechanical strength such as high tensile strength and elongation at break.

BRIEF DESCRIPTION OF THE DRAWINGS

The accompanying drawings illustrate exemplary embodiments of the present disclosure and together with the foregoing disclosure, serve to provide a further understanding of the technical aspect of the present disclosure, and thus the present disclosure should not be construed as being limited to the drawings. In the drawings, for clarity of description, the shape, size, scale or proportion of the elements may be exaggerated for emphasis.

FIG. 1 is a schematic diagram showing an electrode according to an embodiment of the present disclosure.

FIG. 2 is a schematic diagram showing the calculation of a QBR value of an electrode layer.

FIG. 3 is a diagram showing a process of making an electrode film for an electrode according to an embodiment of the present disclosure.

FIG. 4 is a diagram showing an electrode lamination process according to an embodiment of the present disclosure.

FIGS. 5 and 6 show changes in tap compaction ratio and tap density as a function of kneading process time in a process of making a mixture powder.

FIG. 7 is a scanning electron microscopy (SEM) image showing a mixture powder for electrode of comparative example 1.

FIG. 8 is an SEM image showing a mixture powder for electrode of example 1.

FIG. 9 is an SEM image showing a mixture powder for electrode of comparative example 2.

DETAILED DESCRIPTION

Hereinafter, the present disclosure will be described in more detail to help an understanding of the present disclosure.

It should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation.

The terms used herein are used to describe exemplary embodiments, but not intended to be limiting of the present disclosure. As used herein, the singular form is intended to include the plural form as well, unless the context clearly indicates otherwise.

It should be further understood that "comprise", "include" or "have" when used in the specification, specifies the presence of stated elements and does not preclude the presence or addition of one or more other elements unless expressly stated otherwise.

Unless stated otherwise, the unit of temperature is Celsius (°C).

Additionally, the terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

Throughout the disclosure, A and/or B refers to either A or B or both.

The present disclosure relates to a mixture powder for a dry electrode and a dry electrode film comprising the same. In the present disclosure, the dry electrode film may be included in a dry electrode and an electrochemical device.

First, the mixture powder for the dry electrode will be described in detail.

The mixture powder for electrode is a powdery collection of mixture particles comprising an electrode active material and a binder polymer, and is used as an electrode material. For example, as described below, it may be obtained by pulverizing the mass of mixture comprising the electrode active material and the binder polymer. The mixture particles may comprise at least one selected from the electrode active material, the binder, and/or a conductive material. In a specific embodiment, the mixture particles may comprise the electrode active material and the binder. Additionally, the mixture particles may further comprise the conductive material.

Amounts of Components

Meanwhile, in an embodiment of the present disclosure, the mixture powder for the dry electrode may comprise the electrode active material in an amount of 80 wt% or more or 90 wt% or more based on its total weight. Additionally, in an embodiment of the present disclosure, the conductive material may be included in an amount of 20 wt% or less, or 10 wt% or less or 5 wt% or less based on 100 wt% of the mixture powder, and when considering conductivity, may be included in an amount of 0.1 wt% or more. For example, the conductive material may be included in the mixture powder for electrode in a range between amount 0.1 and 5 wt%.

According to an embodiment of the present disclosure, the amount of the electrode active material in the mixture powder for electrode may be 85 wt% to 98 wt%. Within the above-described range, the amount of the binder polymer may be 0.5 to 10 wt%, and the amount of the conductive material may be 0.5 wt% to 5 wt%.

Meanwhile, the dry electrode film and the electrode active material layer of the dry electrode according to the present disclosure may be derived from the mixture powder for electrode, and in this instance, the ratio of amounts of the components may be applied to the dry electrode film and the electrode active material layer as described below. Additionally, it may be applied to the mixture particles of the mixture powder.

Electrode Active Material

Meanwhile, the mixture powder may comprise a positive electrode active material or a negative electrode active material according to the polarity of the electrode applied.

Non-limiting examples of the positive electrode active material include, but are not limited to, lithium transition metal oxide, lithium metal ferrophosphate, or metal oxide, and may include, for example, layered compounds such as lithium cobalt oxide ($LiCoO_2$), lithium nickel oxide ($LiNiO_2$), or compounds with one or more transition metal substitution; lithium manganese oxide such as Chemical Formula $Li_{1+x}Mn_{2-x}O_4$ (where x = 0 to 0.33), $LiMnO_3$, $LiMn_2O_3$, $LiMnO_2$; lithium copper oxide ($Li_2CuO_2$); vanadium oxide such as $LiV_3O_8$, $L_1V_3O_4$, $V_2O_5$, $Cu_2V_2O_7$; Ni site type lithium nickel oxide represented by Chemical Formula $LiNi_{1-x}M_xO_2$ (where M = Co, Mn, Al, Cu, Fe, Mg, B or Ga, x = 0.01 to 0.3); lithium manganese composite oxide represented by Chemical Formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); $LiMn_2O_4$ with partial substitution of Li in Chemical Formula by alkali earth metal ions; lithium metal ferrophosphate LiMPO$_4$ (where M = Fe, CO, Ni, or Mn), disulfide compounds; Fe$_2$(MoO$_4$)$_3$, lithium iron phosphate (LiFePO$_4$), but is not limited thereto.

Non-limiting examples of the negative electrode active material may include carbon such as nongraphitizing carbon, graphite-based carbon; metal composite oxide such as Li$_x$Fe$_2$O$_3$(0≤x≤1), Li$_x$WO$_2$(0≤x≤1), Sn$_x$Me$_{1-x}$Me'$_y$O$_z$ (Me: Mn, Fe, Pb, Ge; Me': Al, B, P, Si, Groups 1, 2 and 3 elements in the periodic table, halogen; 0≤x≤1; 1≤y≤3; 1≤z≤8); lithium metals; lithium alloys; silicon-based alloys; tin-based alloys; silicon-based oxide such as SiO, SiO/C, SiO$_2$; metal oxide such as SnO, SnO$_2$, PbO, PbO$_2$, Pb$_2$O$_3$, Pb$_3$O$_4$, Sb$_2$O$_3$, Sb$_2$O$_4$, Sb$_2$O$_5$, GeO, GeO$_2$, Bi$_2$O$_3$, Bi$_2$O$_4$ and Bi$_2$O$_5$; conductive polymer such as polyacetylene; Li-Co-Ni based materials.

Meanwhile, in an embodiment of the present disclosure, the electrode is a positive electrode. Additionally, the positive electrode may comprise lithium transition metal composite oxide represented by the following [Chemical Formula 1] as the positive electrode active material.

[Chemical Formula 1]     $Li_{1+a}(Ni_xCo_yMn_zM1_w)_{1-a}O_{2-b}M2_b$

In the above Chemical Formula 1, -0.1≤a≤0.3, x+y+z+w=1, 0.3 ≤ x < 1.0, each of y and Z is independently 0 or more and 0.7 or less, 0 ≤ w < 0.1, 0 ≤ b ≤ 0.05, M1 comprises Al, Mg, Ge, Mo, Nb, Si, Ti, Zr, Cr, W, V, or Fe, or a combination of two or more thereof, and M2 comprises boron (B), phosphorus (P), or fluorine (F), or a combination of two or more thereof. In a preferred embodiment of the present disclosure, the M1 may be Al.

Meanwhile, in an embodiment of the present disclosure, the electrode may be a positive electrode, and the positive electrode may comprise lithium iron phosphate together with or independently of the lithium transition metal composite oxide of Chemical Formula 1.

Additionally, in a more specific embodiment, the lithium transition metal composite oxide of Chemical Formula 1 and/or the lithium iron phosphate may be included in an amount of 50 wt% or more, and preferably 70 wt% or more based on 100 wt% of the positive electrode active material in the positive electrode active material layer. Preferably, the lithium transition metal composite oxide of Chemical Formula 1 may be included in an amount of 50 wt% or more, and preferably 70 wt% or more based on 100% of the positive electrode active material in the positive electrode active material layer.

Binder Polymer

In the present disclosure, the binder polymer is not limited to a particular type and may include those that may be fibrillated in the following making method, especially, in the process of making the mass of mixture. The fibrillation refers to breakdown and segmentation of the polymer, and for example, may be performed using a mechanical shearing force. The fibrillated polymer fibers are loosened on the surface into microfibers (fibrils).

Non-limiting examples of the binder polymer may include polytetrafluoroethylene (PTFE), polyolefin, or a mixture thereof, specifically, may include polytetrafluoroethylene (PTFE), and more specifically, may be polytetrafluoroethylene (PTFE). Specifically, the polytetrafluoroethylene (PTFE) may be included in an amount of 60 wt% or more based on the total weight of the binder polymer. Meanwhile, in this instance, the binder material may further comprise polyethylene oxide (PEO), polyvinylidene fluoride (PVdF), polyvinylidene fluoride-co-hexafluoropropylene (PVdF-HFP), or polyolefin-based polymers, or a combination of two or more thereof.

- Conductive Material

In the present disclosure, the mixture powder may further comprise the conductive material. The conductive material is not limited to a particular type and may include any material having conductive properties while not causing any chemical change to the corresponding battery, and may comprise, for example, graphite such as natural graphite or artificial graphite; carbon black such as carbon black, acetylene black, KETJENBLACK , channel black, furnace black, lamp black, or thermal black; conductive fibers such as carbon fibers or metal fibers; fluorocarbon; metal powder such as aluminum powder or nickel powder; conductive whiskers such as zinc oxide or potassium titanate; conductive metal oxide such as titanium oxide; and/or conductive materials such as polyphenylene derivatives, but specifically, for uniform mixing of the conductive material and improved conductivity, may comprise activated carbon, graphite, carbon black, carbon nanotubes, or a combination of two or more thereof, and more specifically, activated carbon.

Fillers

In some instances, meanwhile, the mixture powder may further comprise fillers to suppress swelling of the electrode, and the fillers may include, without limitation, any type of fibrous material that does not cause any chemical change in the corresponding battery, and for example, olefin-based polymer, such as polyethylene or polypropylene; and fibrous materials such as glass fibers or carbon fibers. The fillers may be introduced into the mixture powder such that the fillers are included in the electrode material particles.

Meanwhile, in the present disclosure, the dry electrode film and the electrode active material layer are derived from the mixture powder for electrode, and the ratio of amounts of the materials in the dry electrode film and the electrode active material layer may the same range as the mixture powder.

In the present disclosure, preferably the mixture powder has a low tap density and a low tap compaction ratio. In a specific embodiment, the mixture powder may have the tap density of 1.80 g/cc or less, preferably 1.70 g/cc, and the tap compaction ratio may be controlled to less than 45%. In a more preferred embodiment of the present disclosure, the mixture powder may have the tap compaction ratio of 42% or less.

Meanwhile, in an embodiment, the tap density may be maintained at 1.0 g/cc or more, and the tap compaction ratio may be maintained at 25% or more. When the tap density and the tap compaction ratio is below the above-described range, uniform kneading of the powder fails, and after a film is formed, surface stain may occur so much, and flowability of the powder is bad, and when the powder is fed into the calendar roll, nonuniform feeding occurs, thereby failing to continuously form a film, and defects such as pinholes may occur in the fed powder due to frequent bridging.

Tap Density (g/cc)

In the present disclosure, the tap density refers to the density measured after densely packing until the volume of powder in a container is almost uniform by repeatedly dropping the powder packed container at a predetermined speed from a predetermined height, and may be calculated by the following [Equation 1]. In the present disclosure, the tap density may be measured using a powder measurement machine based on ISO3953:1993 standard. The powder measurement machine is not limited to a particular type and may include any type of well-known in the corresponding technical field, and for example, the tap density may be measured using Bettersize Instrument's PowderPro AI.

Tap density (g/cc) = mass (g) of powder/final apparent volume (cc) of powder Tap Compaction Ratio (%)                                    [Equation 1]

In the present disclosure, the tap compaction ratio is a value calculated according to the following [Equation 2].

In the present disclosure, the bulk density is the density based on the volume including pores between particles when the powder is packed in the container, and refers to the apparent density when the mixture powder for electrode is untapped or unpacked.

[Equation 2]

$$\text{Tap compaction ratio (\%)} = [(\text{Tap density})-(\text{Bulk density})]/(\text{Tap density}) \times 100$$

In the present disclosure, when the tap density and the tap compaction ratio of the mixture powder for electrode satisfies the above-described range, it may be possible to improve the flowability of the powder and prevent bridging when the mixture powder is put into a calendaring machine, thereby obtaining the dry electrode film having less surface defects. High tap density is favorable for good flowability of the powder but when the tap density is high and the tap compaction ratio is high, the dispersion of the electrode materials is low in a kneading process as described below, which makes it difficult to form a uniformly dispersed phase. In contrast, when the tap density is high but the tap compaction ratio is too low, the binder polymer is over fibrillated in the kneading process and the fibrillated polymer filaments are too thin and break frequently, resulting in mechanical property degradation of the dry electrode film.

As described above, the present disclosure was designed under the concept that the optimum level of binder fibrillation may be controlled through the tap density and the tap compaction ratio.

Additionally, in an embodiment of the present disclosure, the mixture powder satisfies a Hausner ratio in a range between 1.45 and 1.7. The Hausner ratio is a value calculated according to the following Equation 3.

[Equation 3]

$$\text{Hausner ratio} = (\text{Tap density})/(\text{Bulk density})$$

The Hausner ratio is a measure of flowability of the powder, and in general, as the value is lower, flowability is higher. However, in the case of the mixture powder comprising the binder for manufacturing the dry electrode according to the present disclosure, the shape of the fibrillated binder, the binding ability of the materials, the size, or shape of the mixture powder or the like may adversely affect the Hausner ratio, and when the Hausner ratio is too low, flowability is low.

Accordingly, the mixture powder for the dry electrode preferably has the above-described range.

Meanwhile, in a more preferred embodiment of the present disclosure, the particle size $D_{10}$ of particles of the mixture powder for electrode may be 35$\mu$m or more, preferably 45 $\mu$m or more. Additionally, the particle size $D_{90}$ of particles of the mixture powder for electrode may be 1,700 $\mu$m or less, preferably 1,500 $\mu$m or less. Meanwhile, in an embodiment of the present disclosure, the particle size $D_{10}$ may be controlled to 150 $\mu$m or less. Additionally, the particle size $D_{90}$ may be 300 $\mu$m or more. When the particle size distribution satisfies the above-described range, fine powder of too small particle size is present in small amounts and it may be possible to prevent fine powder from floating or attaching to the surface of the machine such as the roller and prevent contamination of the manufacturing device, thereby improving the process efficiency. Additionally, the amount of large powder particles is small and bridging is suppressed, thereby reducing the occurrence of pinholes or uncoated regions. Additionally, it may be possible to prevent breaking and machine direction (MD) tearing of the dry electrode film and improve the mechanical properties of the obtained film, thereby improving the yield.

Particle Size Measurement Method

For the particle size $D_{10}$ and particle size $D_{90}$, a cumulative size-distribution curve is obtained through a particle size distribution analyzer manufactured by Nikkiso Co. Ltd.: Microtrac 9220FRA, and the cumulative value 10% is $D_{10}$ and the cumulative value 90% is $D_{90}$ in an ascending order of particle size calculated based on the cumulative size-distribution curve.

Measurement of Tensile Strength (kg/cm$^2$) and Elongation at Break

The tensile strength (kg/cm$^2$) refers to the maximum stress before the sample breaks by the tensile load and the elongation at break refers to a measure (%) of how much the sample can be stretched before it breaks by the tensile load. The elongation at break may be calculated by the following [Equation 4].

[Equation 4]

$$\text{Elongation at break (\%)} = \{(\text{stretched length} - \text{initial length})/\text{initial length}\} \times 100$$

The tensile strength and the elongation at break may be measured using UTM equipment (for example, ZwickRoell), and the measurement standard may be based on ASTM D-638.

Meanwhile, the mixture powder for electrode may be obtained by the following making method.

First, the electrode material mixture comprising the electrode active material and the binder polymer is prepared. The electrode material mixture may further comprise the conductive material and/or additive(s) if necessary, and the ratio of amounts follows the foregoing description. The mixing for making the mixture is performed for a uniformly dispersed phase of the electrode materials such as the electrode active material and the binder polymer in the mixture. Since the present disclosure manufactures a dry electrode without a solvent, the mixing is performed to mix in powder form without using a solvent. Accordingly, the mixing is not limited to a particular method and may use any method for simply mixing the electrode materials. For example, the mixing may be performed by putting the electrode materials into a well-known machine such as a mixer or a blender and stirring them.

Kneading Process

Subsequently, the fibrillation process is performed on the obtained electrode material mixture to fibrillate the binder polymer. The fibrillation process may use mixing by shearing stress, for example, a mechanical milling method or a kneading method.

In an embodiment of the present disclosure, preferably the fibrillation process may use low shear kneading, and may be, for example, performed through a kneader. The electrode materials including the electrode active material added in powder form may be bonded or connected to form the mass of mixture by the fibrillation of the binder polymer by the kneading. Since the kneading does not involve adding solvents, the mass of mixture may contain 100% solids.

In an embodiment of the present disclosure, the kneading may be controlled to the speed of 5 rpm to 100 rpm. For example, the kneading may be controlled to the speed of 10 rpm or more, 70 rpm or less, or 50 rpm or less in the above-described range. Meanwhile, the kneading may be performed for 1 minute to 30 minutes. For example, the kneading may be performed at the speed of 10 rpm to 20 rpm for 3 minutes to 20 minutes in the above-described range.

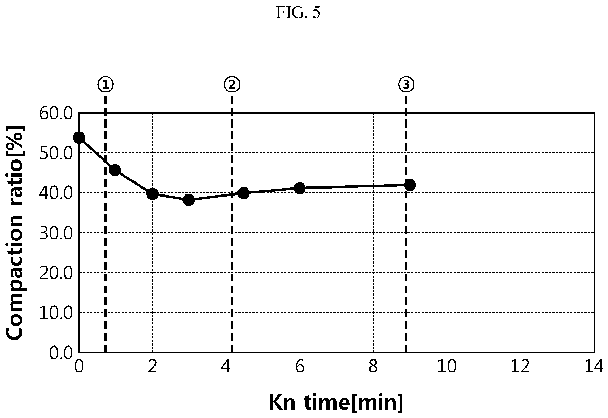

According to FIG. 5, it was confirmed that the tap compaction ratio decreased at the early stage of the kneading process over time and then did not change. Accordingly, too long of a kneading time (Kn time) causes overfibrillation.

Additionally, the kneading step may be performed at high temperature in the pressure condition that is equal to or higher than the atmospheric pressure, and more specifically, in the pressure condition that is higher than the atmospheric pressure. More specifically, the kneading may be performed in a range between 50°C and 230°C, specifically, 90°C to 200°C.

When the kneading is performed at low temperature outside of the above-described range, the binder polymer may be less fibrillated and the input materials may be less agglomerated, which may be unfavorable for the subsequent calendaring process for forming the electrode film into a sheet shape. Meanwhile, when the kneading is performed at too high temperature, fibrillation of the binder polymer occurs rapidly and the already formed fibers may be broken by the shearing force continuously applied in the kneading process.

Additionally, the kneading may be performed under the pressure that is equal to or higher than the atmospheric pressure, specifically 1 atm to 3 atm, more specifically 1.1 atm to 3 atm. When the kneading is performed under too high pressure outside of the above-described range, fiber fracture may occur or the density of the mass of mixture may excessively increase due to too high shearing force and pressure. That is, according to the present disclosure, when the low shear mixing process is performed at high temperature in the pressure condition that is equal to or higher than the atmospheric pressure rather than high shear mixing, it may be possible to achieve the intended effect of the present disclosure.

Grinding

Subsequently, the mass of mixture made through the kneading step is pulverized to obtain the mixture powder for electrode in powder form.

The mass of mixture obtained through the kneading process may be compacted into a sheet shape (calendaring process) by pressing, but in this case, it is necessary to apply strong pressure and high temperature to ensure a target thickness, and as a consequence, the density of the dry electrode film may be too high or it may fail to obtain a uniform film. The mixture powder for electrode is made by pulverizing the obtained mass of mixture.

In this instance, the pulverization is not limited to, but may be performed using a blender or a grinder. In an embodiment of the present disclosure, the pulverization may be specifically performed using the grinder at 5,000 rpm to 20,000 rpm, or 10,000 rpm to 18,000 rpm. Meanwhile, the pulverize process may be performed for 30 seconds to 10 minutes, specifically 30 seconds to 1 minute.

When the pulverization is performed at too low rpm or for a very short time outside of the above-described range, the mass of mixture is not adequately pulverized, resulting in powder particles having improper size to form a film, and when the pulverization is performed at too high rpm or for a long time, fine powder may be produced in very large amounts.

Meanwhile, in the present disclosure, the obtained mixture powder for electrode comprises PTFE and/or polyolefin as the binder resin, and the degree of crystallinity (Xc) of the binder resin may be 20% or less.

In the present disclosure, the degree of crystallinity (Xc) may be measured through differential scanning calorimetry (DSC) on the basis of the temperature (peak temperature) at the time when the enthalpy of crystallization is at the maximum. Specifically, the degree of crystallinity is a % ratio obtained by dividing a melting enthalpy ($\triangle Hm$) value actually measured by DSC by a melting enthalpy ($\triangle Hm^0$, the equilibrium heat of fusion) value of a theoretically perfect crystal (degree of crystallinity 100%), and may be calculated by the following [Equation 5]. Here, for the melting enthalpy ($\triangle Hm^0$) value of a theoretically perfect crystal, reference may be made to an academic essay such as polymer handbook (J. Brandrup et al., 2003) or Polymer Journal. For example, the melting enthalpy value of a theoretically perfect crystal of PTFE is 85.4 J/g (Polymer Vol. 46 (2005) 8872-8882). In general, thermal analysis of polymers such as DSC may be measured and calculated in accordance with ASTM D3418-21.

$$[\text{Equation 5}]$$

$$Xc(\%) = (\triangle Hm \div \triangle Hm^0) \quad x\ 100$$

Dry Electrode Film and Ery Electrode

Additionally, the present disclosure relates to a dry electrode film comprising the mixture powder and a dry electrode comprising the dry electrode film.

The dry electrode film refers to a free-standing type sheet made using the electrode materials comprising the electrode active material and the binder without a solvent. In the present disclosure, the term 'free-standing' refers to standing alone without being supported by another object and able to exist or move on its own.

In the present disclosure, the dry electrode film may be formed by compacting the mixture powder for electrode as described below. For example, the dry electrode film may have a layered packing structure by compaction of the mixture powder for electrode.

In the present disclosure, the dry electrode comprises an electrode active material layer derived from the free-standing type dry electrode film. For example, the dry electrode may include a current collector and the electrode active material layer derived from the dry electrode film on at least one surface of the current collector, and may be manufactured by joining the dry electrode film and the current collector by the lamination process.

Subsequently, a method for manufacturing the dry electrode film and the dry electrode will be described in detail.

Method for Making Dry Electrode Film

In an embodiment of the present disclosure, the dry electrode film may be obtained by compacting the mixture powder for electrode into a shape. In the present disclosure, the process of compacting the mixture powder for electrode to make a sheet type dry electrode film is referred to as a calendaring process. The dry electrode film may be prepared into a sheet shape having a predetermined thickness by the calendaring process. For example, the dry electrode film may have a shape of a strip having an aspect ratio of more than 1. In an embodiment of the present disclosure, the thickness of the dry electrode film may be 50 $\mu$m to 300 $\mu$m.

For example, the calendaring process may be performed by a calendaring method of feeding the mixture powder for electrode into the calendaring machine and thermally compacting using roll press(es) included in the calendaring machine. Additionally, the calendaring process may be performed by a roll-to-roll continuous process.

In an embodiment of the present disclosure, the calendaring machine may include a roll press section including two rollers arranged on opposite sides, and the mixture powder for electrode may be compacted into a sheet shape through the roll press section. A plurality of roll press sections may be continuously arranged to compact the dry electrode film multiple times. The number of roll press sections may be appropriately adjusted, taking into account the thickness of the dry electrode film or the roll pressing ratio. In this instance, the rotational speed ratio of the two rollers of each roll press section may be, independently, appropriately controlled within a range between 1:1 and 1: 10. For example, the rotational speed ratio of the two rollers of at least one roll press section is controlled to 1:1 to 1:3. Additionally, the temperature of the rollers of each roll press section may be independently controlled in a range between 60°C and 250°C. The dry electrode film may be made by the calendaring process. In an embodiment of the present disclosure, the degree of crystallinity (d) of the binder resin in the dry electrode film may be controlled to 10% or less. In the case where the degree of crystallinity of the resulting dry electrode film is more than 10%, the degree of crystallinity may be adjusted by adjusting the gap between the two rollers of the roll press section or controlling the rotational speed ratio. For example, the degree of fibrillation of the binder may be increased by reducing the gap and/or increasing the rotational speed ratio. When the degree of crystallinity is controlled to 10% or less, flexibility of the dry electrode film increases, thereby preventing breaking or cracking during winding and storage or unwinding. Additionally, as flexibility increases, the mechanical strength such as tensile strength and tensile elongation may improve.

Meanwhile, in the present disclosure, the dry electrode film may have the porosity of 20 vol% to 50 vol%, and the porosity may be preferably controlled to 40 vol% or less or 35 vol% or less in the above-described range. When the porosity satisfies the above-described range, it is preferred in terms of various effects. In contrast, when the porosity is too low outside of the above-described range, electrolyte solution wetting is not good, so it is not preferred in terms of life characteristics and output characteristics, and when the porosity is too high, the volume increases to achieve the same capacity, so it is not preferred in terms of energy density relative to volume. In an embodiment of the present disclosure, the porosity may be determined by measuring the apparent density of the dry electrode film, and calculating by the following [Equation 6] using the actual density calculated based on the actual density and composition of each constituent component.

[Equation 6]

$$\text{Porosity (vol\%)} = \{1 - (\text{apparent density/true density})\} \times 100$$

Method for Manufacturing Dry Electrode

Subsequently, a method for manufacturing the dry electrode according to an embodiment of the present disclosure will be described.

In an embodiment of the present disclosure, the dry electrode may be manufactured by joining the dry electrode film and the current collector by the lamination process. Specifically, the obtained dry electrode film is stacked on one or two surfaces of the current collector and the current collector and the dry electrode film are joined by the lamination process to manufacture an electrode. The lamination may be the step of rolling and attaching the dry electrode film to the current collector. The lamination may be performed by a roll pressing method using lamination rollers, and in this instance, the lamination rollers may be adjusted to the temperature in a range between 20°C and 200°C. In the present disclosure, as a result of lamination, the dry electrode film attached to the current collector is referred to as electrode active material layer.

FIG. 4 schematically shows the method for manufacturing the electrode according to an embodiment of the present disclosure. Referring to FIG. 4, the current collector 220 is fed, the dry electrode film 230 is placed on two surfaces of the current collector 220, and the current collector and the dry electrode film are joined while the dry electrode film 230 passes through the lamination rolls 210 to obtain the dry electrode 240.

Meanwhile, in an embodiment of the present disclosure, the current collector is not limited to a particular type and may include those having high conductivity without causing any chemical change to the battery, and may include, for example, stainless steel;aluminum; nickel; titanium; sintered carbon; copper; aluminum; or stainless steel treated with carbon, nickel, titanium, or silver on the surface. The current collector may have microtexture on the surface to increase the adhesion strength of the positive electrode active material, and may come in various forms, for example, a film, a sheet, a foil, a net, a porous body, a foam, and/or a nonwoven.

Meanwhile, in an embodiment of the present disclosure, the current collector may be coated with a conductive primer in whole or in part to reduce the resistance on the surface and improve the adhesion strength. Here, the conductive primer may comprise a conductive material and a binder, and the conductive material is not limited to a particular material and may include any material having conductive properties, and for example, carbon-based materials. The binder may comprise fluorine-based (including PVDF and PVDF copolymers) binders, acrylic binders, and/or aqueous binders that dissolve in solvents.

QBR

Meanwhile, in an embodiment of the present disclosure, the binder polymer may comprise a fluorine containing binder, and the electrode active material layer may have a Quantified Binder Ratio (QBR) of 1.1 or less.

The QBR is defined by the following [Equation 7].

$$[\text{Equation 7}]$$

$$QBR = Bs/Bf$$

In the above [Equation 7], Bs is the average fluorine content in the surface region of the electrode active material layer within 15% of the total thickness of the electrode active material layer from the outermost surface of the electrode active material layer, and Bf is the average fluorine content in the bottom region of the electrode active material layer within 15% of the total thickness of the electrode active material layer from the interface between the current collector and the electrode active material layer.

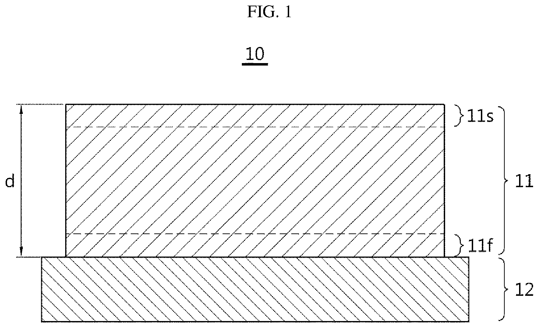

FIG. 1 is a schematic diagram of the electrode according to an embodiment of the present disclosure. Referring to FIG. 1, the electrode 10 comprises the electrode current collector 12; and the electrode active material layer 11 disposed on the electrode current collector 12 and comprising the electrode active material and the binder polymer.

The electrode active material layer 11 has the surface region 11s of the electrode active material layer within 15% of the total thickness (d) of the electrode active material layer from the outermost surface of the electrode active material layer, and the bottom region 11f of the electrode active material layer within 15% of the total thickness (d) of the electrode active material layer from the interface between the current collector and the electrode active material layer.

In the above equation QBR, Bs is the average fluorine content in the surface region 11s of the electrode active material layer 11, and Bf is the average fluorine content in the bottom region 11f of the electrode active material layer.

In this instance, QBR may be calculated by the following method.

First, a target electrode for QBR determination is selected, and a cross section of the selected electrode is prepared using argon ion milling. Subsequently, EDS mapping of the constituent elements in the electrode active material layer 11 of the electrode cross section is performed using an energy dispersive X-ray spectroscopy (EDS) detector of a scanning electronic microscope (SEM).

A line profile is extracted from the EDS mapping results in the thickness-wise direction of the electrode active material layer 11, the average fluorine content Bs of the fluorine containing binder in the electrode active material layer surface region 11s and the average fluorine content Bf of the fluorine containing binder in the electrode active material layer bottom region 11f are extracted from the extracted line profile results, and QBR is calculated using the above [Equation 6].

In this instance, the electrode active material layer surface region 11s is a region within 15% of the total thickness of the electrode active material layer 11 from the outermost surface in the thickness-wise direction of the electrode active material layer, and the electrode active material layer bottom region 11f is a region within 15% of the total thickness of the electrode active material layer from the interface between the current collector and the electrode active material layer.

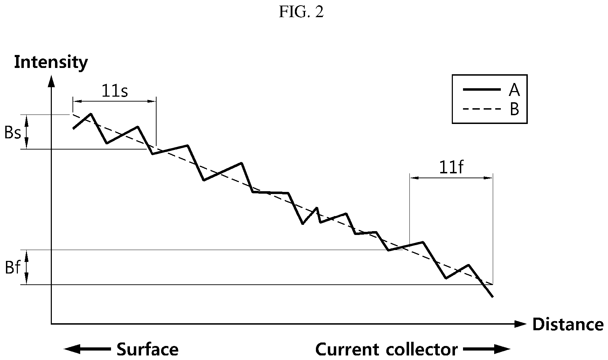

FIG. 2 is a schematic diagram illustrating the calculation of the QBR value of the electrode active material layer.

Referring to FIG. 2, the X axis indicates the thickness of the electrode active material layer, i.e., a distance from the surface to the current collector, and the Y axis indicates the fluorine intensity. The line A indicates the fluorine intensity of the fluorine containing binder extracted by EDS mapping of fluorine in the electrode active material layer of the electrode cross section, and the line B is a trend line showing a trend of the line A by locally weighted scatterplot smoothing (LOWESS).

The QBR value is a value that indicates the thickness-wise distribution uniformity of the fluorine containing binder in the electrode active material layer through a ratio of the amount of the fluorine containing binder in the surface region of the electrode active material layer to the amount of the fluorine containing binder in the bottom region of the electrode active material layer. In this instance, the amount of the fluorine containing binder may be inferred through fluorine contained in the fluorine containing binder used.

The QBR value is 1.1 or less, and according to an embodiment of the present disclosure, the QBR value may be 0.95 or more, or 0.97 or more, and 1.03 or less, or 1.05 or less. The QBR value may be 0.95 to 1.05.

When the QBR value satisfies the range of 1.1 or less, it may be possible to prevent the problem that the amount of the fluorine containing binder in the surface region of the electrode active material layer is larger than the amount of the fluorine containing binder in the bottom region of the electrode active material layer, leading to a uniform binder distribution in the thickness-wise direction of the electrode active material layer due to the migration of the fluorine containing binder to the electrode surface, thereby preventing a reduction in binder content in the region near the current collector, improving the adhesion strength between the current collector and the electrode active material layer, and thus improving the conductivity on the electrode active material layer surface and the charge/discharge rate.

The fluorine containing binder may specifically comprise polytetrafluoroethylene (PTFE),PVDF-based copolymers, or a combination of two or more thereof such as polyvinylidene fluoride (PVdF) and polyvinylidene fluoride-co-hexafluoropropylene (PVdF-HFP). Additionally, the fluorine containing binder may comprise polytetrafluoroethylene alone or may comprise polytetrafluoroethylene and further comprise PVdF-based copolymers such as polyvinylidene fluoride (PVdF), polyvinylidene fluoride-co-hexafluoropropylene (PVdF-HFP), or a combination of two or more thereof.

Compression Ratio

Meanwhile, according to an embodiment of the present disclosure, the dry electrode film may have a compression ratio of 30 to 50%, 35 to 50%, or 40 to 50%.

The compression ratio may be defined as a ratio of compressed thickness of the dry electrode film at the moment of lamination to combine the dry electrode film with the current collector, and may be represented by the following [Equation 8].

[Equation 8]

$$\text{Compression ratio } (\%) = T_p/T_1 \times 100$$

In the above Equation 8,

$T_p$ denotes the compressed thickness of the dry electrode film when pressed in the lamination step, and
$T_1$ denotes the thickness of the dry electrode film before the lamination step.

In the present disclosure, when the compression ratio is adjusted to the specific range in the lamination step, it may be possible to provide the optimal density and porosity of the dry electrode film and high bonding strength between the dry electrode film and the current collector.

When the compression ratio satisfies the range between 30 and 50%, due to the sufficient pressure applied to the dry electrode film, it may be possible to enhance the adhesion strength between the dry electrode film and the current collector, prevent the peel-off of the electrode active material layer from the current collector in the electrode manufactured by the lamination process, and avoid lower porosity of the electrode active material layer than the target porosity due to the increased density of the dry electrode film more than necessary or damage to the current collector.

In an embodiment of the present disclosure, in the lamination of the dry electrode film onto two surfaces of the current collector, the compression ratio (%) of the above [Equation 8] may be rewritten as the following [Equation 9].

[Equation 9]

$$30 \leq (T_1 + 0.5T_c - 0.5T_{gap})/T_1 \times 100 \leq 50$$

In the above Equation 9, $T_1$ denotes the thickness of the dry electrode film before the lamination step, $T_c$ denotes the thickness of the current collector, and $T_{gap}$ denotes the gap between first and second press rolls.

Additionally, the roll pressing ratio of the dry electrode film subjected to lamination may be in a range of 20% or less, or 18% or less, or 15% or less, or 5% to 15%, or 6% to 15%, or 7% to 15%, or 9% to 13%. After the lamination step is performed, the dry electrode film may be the electrode active material layer.

Here, the roll pressing ratio may be defined as a ratio of the thickness of the dry electrode film after the lamination step to the thickness of the dry electrode film before the lamination step, and may be represented by the following [Equation 10].

$$[\text{Equation 10}]$$

$$\text{Roll pressing ratio } (\%) = (T_1\text{-}T_2)/T_1 \times 100$$

In the above [Equation 10],

$T_1$ denotes the thickness of the dry electrode film before the lamination step, and
$T_2$ denotes the thickness of the dry electrode film after the lamination step.

When the roll pressing ratio satisfies the above-described range, in the manufactured dry electrode, the electrode active material layer may exhibit the optimal density and porosity and have the improved adhesion strength with the current collector.

In the dry electrode film, an increase in apparent density before and after the lamination with the current collector may be represented by the following [Equation 11]:

$$[\text{Equation 11}]$$

$$\text{Increase in apparent density } (\%) = (D_2\text{-}D_1)/D_1 \times 100$$

$D_1$ denotes the apparent density ($g/cm^3$) of the dry electrode film before the lamination step, and
$D_2$ denotes the apparent density ($g/cm^3$) of the dry electrode film (i.e., the electrode active material layer) after the lamination step.

The increase in apparent density of the dry electrode film before and after the lamination with the current collector may be 5 to 30%, or 7 to 25%, or 10 to 20%. In this instance, the $D_1$ and $D_2$ may be in a range between 2.75 $g/cm^3$ and 3.5 $g/cm^3$. Meanwhile, when the increase in apparent density of the dry electrode film satisfies the above-described range, it may be possible to improve the adhesion strength between the dry electrode film and the current collector, and prevent the porosity outside of the target range or damage to the positive electrode active material or the current collector.

The apparent density of the dry electrode film before and after the lamination with the current collector may be calculated by measuring the weight and thickness of the dry electrode film before the lamination, measuring the weight and thickness of the electrode after the lamination and subtracting the weight and thickness of the current collector to find the weight and thickness of the film.

In an embodiment of the present disclosure, the active material loading amount of the dry electrode may be 3 $mAh/cm^2$ to 15 $mAh/cm^2$, and specifically 4 $mAh/cm^2$ to 10 $mAh/cm^2$.

Here, the active material loading amount is a value calculated by the following [Equation 12].

Active material loading amount ($mAh/cm^2$) = (Capacity ($mAh/g$) of active material) --> x (weight percent (wt%) of active material in dry electrode) x (weight per unit area of dry electrode ($g/cm^2$))　　[Equation 12]

Additionally, in the dry electrode, the interfacial resistance between the electrode active material layer and the current collector may be 5 $\Omega\cdot cm^2$ or less, and specifically 2 $\Omega\cdot cm^2$ or less. Here, the interfacial resistance may be calculated by applying an electric current of 100 $\mu A$ to the electrode using a multiprobe (MP) resistance measurement method, and measuring a resistance value between the electrode active material layer and the current collector layer using a potential difference measured between the multiple probes. When the interfacial resistance satisfies the above-described range, it may be possible to improve the battery performance of a secondary battery that will be fabricated.

Additionally, the present disclosure relates to an electrode assembly comprising the dry electrode obtained as described above and an electrochemical device comprising the same. The electrode assembly may comprise a positive electrode, a negative electrode, and a separator interposed between the positive electrode and the negative electrode. In another embodiment of the present disclosure, the electrode assembly may comprise a positive electrode, a negative electrode, and a solid electrolyte membrane interposed between the positive electrode and the negative electrode. In each embodiment, the positive electrode and/or the negative electrode may be the dry electrode having the above-described feature.

The electrochemical device of the present disclosure include any type of device in which electrochemical reaction occurs, and specific examples may include any type of primary and secondary batteries, fuel cells, solar cells or capacitors such as supercapacitors. In particular, among the secondary batteries, lithium secondary batteries including lithium metal secondary batteries, lithium ion secondary batteries, lithium polymer secondary batteries or lithium ion polymer secondary batteries are preferred.

Hereinafter, the present disclosure will be described in detail based on example, comparative example and experimental example according to the present disclosure to help those skilled in the art to easily understand the present disclosure.

[Example]

Preparation of mixture powder for electrode and dry electrode film

(Examples 1 to 5 and comparative examples 1 to 6)

$LiNi_{0.85}Co_{0.05}Mn_{0.08}Al_{0.02})O_2$, carbon black and polytetrafluoroethylene (PTFE) were put into a blender at a weight ratio of 96:1:3 and mixed at 10,000 rpm for 1 minute to make a mixture. The temperature of a kneader was stabilized to 150°C, and the mixture was put into the kneader to perform kneading at 50 rpm under the pressure of 1.1 atm to obtain a mass of mixture. The mass of mixture was put into a blender, pulverized at 10,000 rpm and sieved using a mesh having 1 mm openings to obtain a mixture powder for electrode. The following [Table 1] shows the kneading time and grinding time in each example and comparative example. The following [Table 2] summaries the properties of the mixture powder for electrode obtained in each example, and the following [Table 3] summaries the properties of the mixture powder for electrode obtained in each comparative example.

Subsequently, each mixture powder for electrode was put into a first lab calender (roll diameter: 88 mm, roll temperature: 100°C, 20/24 rpm) to compact it, and the result was put into a second lab calender of the same condition, followed by thickness adjustment, to a dry electrode film. The following [Table 4] summaries the properties of the dry electrode film obtained in each example, and the following [Table 5] summaries the properties of the dry electrode film obtained in each comparative example.

[Table 1]

|  | Kneading time (min) | Grinding time (sec) |
|---|---|---|
| Example 1 | 4min | 60 sec |
| Example 2 | 6 min | 60 sec |
| Example 3 | 3.5 min | 60 sec |
| Example 4 | 9 min | 60 sec |
| Example 5 | 6 min | 30 sec |
| Comparative example 1 | 1 min | 60 sec |
| Comparative example 2 | 15 min | 30 sec |
| Comparative example 3 | 8 min | 180 sec |
| Comparative example 4 | 3 min | 20 sec |
| Comparative example 5 | 20 min | 60 sec |
| Comparative example 6 | 20 min | 120 sec |

[Table 2]

|  | Example 1 | Example 2 | Example 3 | Example 4 | Example 5 |
|---|---|---|---|---|---|
| Particle size (D10) | 112 | 96 | 160 | 130 | 197 |
| Particle size (D90) | 560 | 380 | 880 | 640 | 931 |

(continued)

|  | Example 1 | Example 2 | Example 3 | Example 4 | Example 5 |
|---|---|---|---|---|---|
| Tap density (g/cc) | 1.43 | 1.53 | 1.38 | 1.67 | 1.39 |
| Tap compaction ratio (%) | 37 | 36 | 36 | 39 | 33 |
| Hausner ratio | 1.59 | 1.56 | 1.56 | 1.64 | 1.50 |

[Table 3]

|  | Comparative example 1 | Comparative example 2 | Comparative example 3 | Comparative example 4 | Comparative example 5 | Comparative example 6 |
|---|---|---|---|---|---|---|
| Particle size (D10) ($\mu$m) | 120 | 100 | 30 | 380 | 15 | 7 |
| Particle size (D90) ($\mu$m) | 580 | 300 | 120 | 1800 | 69 | 17 |
| Tap density (g/cc) | 1.35 | 1.83 | 1.71 | 1.37 | 2.05 | 2.22 |
| Tap compaction ratio (%) | 45 | 42 | 39 | 35 | 29 | 32 |
| Hausner ratio | 1.82 | 1.72 | 1.64 | 1.54 | 1.42 | 1.44 |

[Table 4]

|  | Example 1 | Example 2 | Example 3 | Example 4 | Example 5 |
|---|---|---|---|---|---|
| Number of uncoated regions or pinholes per 10M of dry electrode film | 0 | 0 | 0 | 0 | O |
| Presence or absence of stain of dry electrode film obtained after primary calendaring | x(absent) | x(absent) | x(absent) | x(absent) | X(absent) |
| Tensile strength [Mpa] of dry electrode film | 1.52 | 1.48 | 1.69 | 1.37 | 1.52 |
| Elongation at break (%) of dry electrode film | 6.8 | 7.2 | 10 | 7.8 | 6.9 |
| Contamination of calendar roll by fine powder | None | None | None | None | None |

[Table 5]

|  | Comparative example 1 | Comparative example 2 | Comparative example 3 | Comparative example 5 | Comparative example 6 |
|---|---|---|---|---|---|
| Number of uncoated regions or pinholes per 10m of dry electrode film | 3 | 0 | 0 | 0 | 0 |
| RP primary film stain | 0(present) | X(absent) | X(absent) | X(absent) | X(absent) |
| Tensile strength [Mpa] of dry electrode film | 1.2 | 0.51 | 0.42 | 0.21 | 0.14 |
| Elongation at break (%) of dry electrode film | 3.2 | 3.6 | 2.5 | 3.7 | 4 |

(continued)

|  | Comparative example 1 | Comparative example 2 | Comparative example 3 | Comparative example 5 | Comparative example 6 |
|---|---|---|---|---|---|
| Contaminatio n of calendar roll by fine powder | High | Intermediate | High | High | High |
| Note | Optimal point is not reached due to short kneading time | Fiber fracture usually occurs due to overkneading | Large amount of fine powder particles due to overgrinding | Low process efficiency due to overkneading and finely powdered | Low process efficiency due to overkneading and finely powdered |

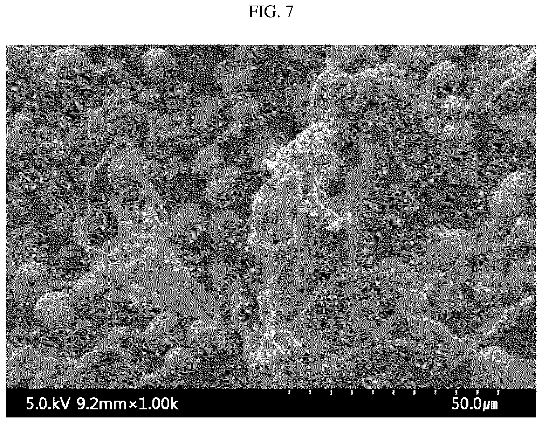

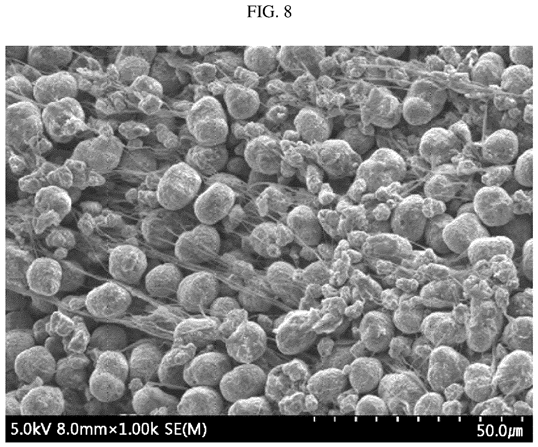

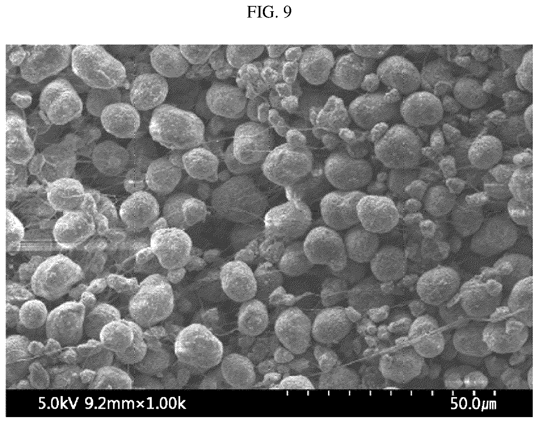

As can be seen through the above [Table 2] and [Table 3], examples 1 to 5 obtained the mixture powder for electrode having the tap density of 1.80 g/cc or less and the tap compaction ratio of less than 45%. Additionally, it was confirmed that the $D_{10}$ diameter of particles was 35 $\mu$m or more and the $D_{90}$ diameter was 1,700 $\mu$m or less. As can be seen through the above [Table 4] and [Table 5], the dry electrode films obtained in examples 1 to 5 did not have pinholes or stains in the primary calendaring result. Additionally, they showed better tensile strength and elongation at break than the dry electrode of comparative example. FIG. 7 is a SEM image of the mixture powder for electrode of comparative example 1. Referring to FIG. 7, it was confirmed that the binder polymer was not sufficiently fibrillated due to the short kneading time. Meanwhile, FIG. 9 is a SEM image of the mixture powder for electrode of comparative example 2. It was confirmed that comparative example 2 exhibited fine powder in large amounts and frequent breakage of the fibrillated binder polymer due to the long kneading and grinding time. FIG. 8 is a SEM image of the mixture powder for electrode of example 1. Referring to FIG. 8, the binder polymer was fibrillated, fine powder was present in small amounts and there was no or little breakage of the polymer filaments.

Meanwhile, there was a difference in the presence or absence of fine powder or coarse powder (not used to form a film and maintains the mass) in the powder between example and comparative example. Fine powder and/or coarse powder in the powder fed in the calendaring process is not used to form a film, causing pinholes or roll surface to get stained, resulting in contamination of the machine. It was confirmed that all comparative examples 1 to 3, 5 and 6 were contaminated by fine powder. In case where the mixture particles have the optimal particle size or the active material is bonded well by fibrillation, the powder forms a film between the calendaring rollers and most of them is bonded to the film, but in case where the particle size of the mixture particles is too small or fibrillation is too much, causing low binding strength or fiber fracture and consequential binding failure, the powder fails to participate in forming a film, causing the roller surface to get stained. In comparative example 1, the active material not bonded to PTFE floated like dust due to lack of fibrillation, and the roller surface got stained, and in the case of comparative examples 2 and 3, fine powder was produced due to overkneading or overgrinding. In the case of comparative example, it is necessary to clean the surface of the roller, resulting in low process efficiency. Meanwhile, comparative example 4 had eight pinholes per 10 meter of the dry electrode film. It causes breakage of the film and actually, the active material is absent to form voids, resulting in a reduction in the loading amount of the electrode active material. Further, the Li ion diffusion rate changes for each location in the electrode depending on the presence or absence of pinholes and reaction at or around the pinholes is faster. It may cause hotspots in the battery. Additionally, comparative examples 5 and 6 had a lower Hausner ratio than example, but the low Hausner ratio in the mixture powder for the dry electrode is not proper for the improved mechanical strength of the dry electrode film, and contamination caused by fine powder occurred so much. In contrast, in the case of example, fine powder was present in small amounts and the reduction in process efficiency did not occur.

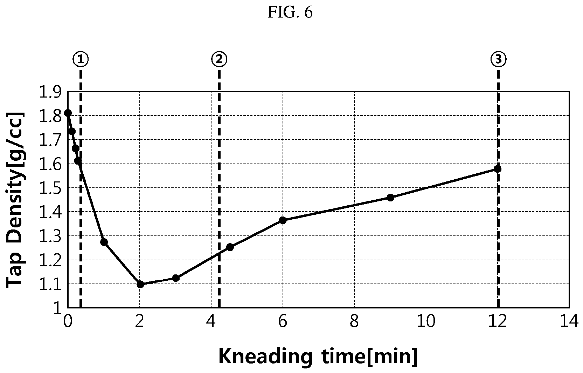

FIGS. 5 and 6 show changes in tap density and the tap compaction ratio as a function of the kneading process time in the process of making the mixture powder. Referring to FIGS. 5 and 6, it was confirmed that the tap density and the tap compaction ratio decreased at the early stage of the kneading process and after a predetermined time passed, the tap compaction ratio did not nearly change, and the tap density increased after a specific time. It is desirable to prevent the breakage of the fibrillated polymer by overkneading by controlling the kneading process time to the range in which the tap compaction ratio and tap density decreases.

Particle Size Measurement Method

For the particle size (D10) and particle size (D90), a cumulative size-distribution curve was obtained through a particle size distribution analyzer manufactured by Nikkiso Co. Ltd.: Microtrac 9220FRA and the cumulative value 10% was $D_{10}$ and the cumulative value 90% was $D_{90}$ in an ascending order of particle size calculated based on the cumulative size-distribution curve.

Tap Density (g/cc)

The tap density refers to the density measured after densely packing until the volume of powder in a container is almost uniform by repeatedly dropping the powder packed container at a predetermined speed from a predetermined height. In the present disclosure, the tap density was measured using a powder measurement instrument (Powderpro Al, Bettersize Instruments) based on ISO3953:1993 standard. Specifically, 10 g of the mixture powder for electrode was filled in a 25 ml mess cylinder and tapped 1250 times with the stroke length of 10 mm, and when a volume change is 2% or less, the final apparent volume was determined.

[Equation 1]

$$\text{Tap density} = \text{mass (g) of powder/final apparent volume (cc) of powder}$$

Tap Compaction Ratio (%)

The tap compaction ratio was calculated according to the following Equation 2. The bulk density is the density based on the volume including pores between particles when the powder is packed in the container, and refers to the apparent density when the mixture powder for electrode is untapped or unpacked.

[Equation 2]

$$\text{Tap compaction ratio (\%)} = [(\text{Tap density}) - (\text{Bulk density})]/(\text{Tap density}) \times 100$$

Measurement of Tensile Strength ($kg/cm^2$) and Elongation at Break

The dry electrode film of each example and comparative example was cut into $10 \times 70$ $mm^2$ to prepare a sample for measurement. For each sample, measurement was made based on ASTM D-638 using UTM equipment (ZwickRoell). The pre-load value was 0.01kg/cm, and the test speed was 50 mm/min. The tensile strength ($kg/cm^2$) refers to the maximum stress before the sample breaks by the tensile load, and the elongation at break refers to a measure (%) of how much the same can be stretched before it breaks by the tensile load. The elongation at break was calculated based on the following [Equation 4].

[Equation 4]

$$\text{Elongation at break (\%)} = \{(\text{stretched length} - \text{initial length})/\text{initial length}\} \times 100$$

**Claims**

1. A mixture powder for an electrode, comprising:

   an electrode active material and a binder polymer,
   wherein the binder polymer comprises polytetrafluoroethylene (PTFE), polyolefin or both,
   wherein a tap density is equal to or less than 1.80 g/cc, and a tap compaction ratio is less than 45%, and
   wherein a $D_{10}$ diameter of particles is 35 $\mu$m or more and a $D_{90}$ diameter is 1,700 $\mu$m or less.

2. The mixture powder for the electrode according to claim 1, wherein the mixture powder has a Hausner ratio of 1.45 to 1.7.

3. The mixture powder for the electrode according to claim 1, wherein the electrode active material comprises a lithium transition metal composite oxide represented by the following [Chemical Formula 1]:

   [Chemical Formula 1] $\quad$ $Li_{1+a}(Ni_xCo_yMn_zM1_w)_{1-a}O_{2-b}M2_b$

   wherein $-0.1 \leq a \leq 0.3$, $x+y+z+w=1$, $0.3 \leq x < 1.0$, each of y and Z is independently 0 or more and 0.7 or less, $0 \leq w \leq 0.1$, 0

$\leq b \leq 0.05$, M1 comprises Al, Mg, Ge, Mo, Nb, Si, Ti, Zr, Cr, W, V,or Fe or a combination of two or more thereof, and M2 comprises boron (B), phosphorus (P) or fluorine (F) or a combination of two or more thereof.

4. The mixture powder for the electrode according to claim 3, wherein the lithium transition metal composite oxide is included in an amount of 50 wt% or more based on 100 wt% of the electrode active material.

5. The mixture powder for the electrode according to claim 1, wherein the electrode active material comprises a lithium iron phosphate compound in an amount of 50 wt% or more based on 100 wt% of the electrode active material.

6. The mixture powder for the electrode according to claim 1, wherein the binder polymer is fibrillated as a result of applying a shearing stress in whole or in at least part.

7. The mixture powder for the electrode according to claim 1, wherein the mixture powder for the electrode has a tap compaction ratio of 42% or less.

8. The mixture powder for the electrode according to claim 1, wherein the mixture powder for the electrode has a particle diameter $D_{10}$ of 150 $\mu$m or less.

9. The mixture powder for the electrode according to claim 1, wherein the mixture powder for the electrode has a particle diameter of 300 $\mu$m or more.

10. The mixture powder for the electrode according to claim 1, further comprising:
a conductive material.

11. A dry electrode film, comprising:
the mixture powder for the electrode according to claim 1, wherein the mixture powder for the electrode is compacted into a free-standing type sheet shape by pressing.

12. A dry electrode, comprising:
a current collector and a dry electrode film joined by a lamination process.

13. An electrochemical device, comprising:
a negative electrode, a positive electrode and a separator interposed between the negative electrode and the positive electrode, wherein the negative electrode and/or the positive electrode is the dry electrode according to claim 11.

14. A method for manufacturing the mixture powder for the electrode according to claim 1, the method comprising:

(S10) mixing electrode materials comprising the electrode active material and the binder polymer;
(S20) kneading the mixed electrode materials; and
(S30) grinding a result of the step (S20).

15. A method for manufacturing a dry electrode, comprising:

(S40) compacting the mixture powder for the electrode obtained in claim 13 into a shape so as to form a free-standing type dry electrode film; and
(S50) joining the film and the current collector.

FIG. 1

<u>10</u>

FIG. 2

FIG. 3

100

FIG. 4

FIG. 5

FIG. 6

FIG. 7

5.0.kV 9.2mm×1.00k                                    50.0µm

FIG. 8

5.0kV 8.0mm×1.00k SE(M)    50.0μm

FIG. 9

## INTERNATIONAL SEARCH REPORT

| International application No. |
|---|
| **PCT/KR2023/005417** |

| A. | CLASSIFICATION OF SUBJECT MATTER |
|---|---|

**H01M 4/131**(2010.01)i; **H01M 4/525**(2010.01)i; **H01M 4/505**(2010.01)i; **H01M 4/58**(2010.01)i; **H01M 4/62**(2006.01)i; **H01M 4/04**(2006.01)i; **H01M 4/1391**(2010.01)i; **H01M 4/136**(2010.01)i; **H01M 4/1397**(2010.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/052(2010.01); H01M 10/0525(2010.01); H01M 4/04(2006.01); H01M 4/13(2010.01); H01M 4/137(2010.01); H01M 4/139(2010.01); H01M 4/16(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 활물질(active material), 바인더(binder), 폴리테트라플루오로에틸렌(PTFE), 폴리올레핀(polyolefine), 탭 밀도(tap density), 하우스너 비율(hausner ratio), 벌크 밀도(bulk density)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0156340 A (MAXWELL TECHNOLOGIES, INC.) 24 December 2021 (2021-12-24) See claims 1, 17, 19, 22 and 25; and paragraphs [0045], [0049], [0058]-[0067] and [0122]. | 12-13 |
| Y |  | 1-11,14-15 |
| Y | KR 10-2019-0035579 A (LG CHEM, LTD.) 03 April 2019 (2019-04-03) See claims 1-6; paragraphs [0021]-[0023], [0051] and [0084]; and table 1. | 1-11,14-15 |
| A | US 2020-0313193 A1 (MAXWELL TECHNOLOGIES INC.) 01 October 2020 (2020-10-01) See entire document. | 1-15 |
| A | US 2020-0259180 A1 (MAXWELL TECHNOLOGIES INC.) 13 August 2020 (2020-08-13) See entire document. | 1-15 |
| A | JP 2019-527452 A (NANTONG VOLTA MATERIALS LTD.) 26 September 2019 (2019-09-26) See entire document. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 August 2023** | **07 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** |  |
| Facsimile No. **+82-42-481-8578** | Telephone No. |

Form PCT/ISA/210 (second sheet) (July 2022)

| | Patent document cited in search report | | | Publication date (day/month/year) | Patent family member(s) | | | Publication date (day/month/year) |
|---|---|---|---|---|---|---|---|---|
| KR | 10-2021-0156340 | A | | 24 December 2021 | CN | 106463267 | A | 22 February 2017 |
| | | | | | CN | 113223860 | A | 06 August 2021 |
| | | | | | EP | 3132481 | A1 | 22 February 2017 |
| | | | | | EP | 3132481 | B1 | 20 October 2021 |
| | | | | | EP | 4016666 | A1 | 22 June 2022 |
| | | | | | ES | 2902211 | T3 | 25 March 2022 |
| | | | | | JP | 2017-517862 | A | 29 June 2017 |
| | | | | | JP | 2019-216101 | A | 19 December 2019 |
| | | | | | JP | 6885864 | B2 | 16 June 2021 |
| | | | | | JP | 6917418 | B2 | 11 August 2021 |
| | | | | | KR | 10-2016-0145043 | A | 19 December 2016 |
| | | | | | KR | 10-2342275 | B1 | 22 December 2021 |
| | | | | | KR | 10-2463477 | B1 | 04 November 2022 |
| | | | | | MX | 2016013413 | A | 06 April 2017 |
| | | | | | US | 10741843 | B2 | 11 August 2020 |
| | | | | | US | 2015-0303481 | A1 | 22 October 2015 |
| | | | | | US | 2020-0358100 | A1 | 12 November 2020 |
| | | | | | WO | 2015-161289 | A1 | 22 October 2015 |
| KR | 10-2019-0035579 | A | | 03 April 2019 | CN | 110476282 | A | 19 November 2019 |
| | | | | | EP | 3595052 | A2 | 15 January 2020 |
| | | | | | EP | 3595052 | A4 | 24 June 2020 |
| | | | | | EP | 3595052 | B1 | 21 July 2021 |
| | | | | | KR | 10-2378118 | B1 | 25 March 2022 |
| | | | | | PL | 3595052 | T3 | 13 December 2021 |
| | | | | | US | 11276846 | B2 | 15 March 2022 |
| | | | | | US | 2020-0321599 | A1 | 08 October 2020 |
| | | | | | WO | 2019-059724 | A2 | 28 March 2019 |
| | | | | | WO | 2019-059724 | A3 | 09 May 2019 |
| US | 2020-0313193 | A1 | | 01 October 2020 | CN | 113939925 | A | 14 January 2022 |
| | | | | | EP | 3948985 | A1 | 09 February 2022 |
| | | | | | JP | 2022-527458 | A | 02 June 2022 |
| | | | | | KR | 10-2021-0143777 | A | 29 November 2021 |
| | | | | | WO | 2020-205447 | A1 | 08 October 2020 |
| US | 2020-0259180 | A1 | | 13 August 2020 | WO | 2020-150266 | A1 | 23 July 2020 |
| JP | 2019-527452 | A | | 26 September 2019 | CN | 107565086 | A | 09 January 2018 |
| | | | | | CN | 107565086 | B | 13 December 2022 |
| | | | | | EP | 3480870 | A1 | 08 May 2019 |
| | | | | | EP | 3480870 | A4 | 13 November 2019 |
| | | | | | JP | 2021-120954 | A | 19 August 2021 |
| | | | | | US | 11121356 | B2 | 14 September 2021 |
| | | | | | US | 2019-0326583 | A1 | 24 October 2019 |
| | | | | | WO | 2018-000938 | A1 | 04 January 2018 |

Form PCT/ISA/210 (patent family annex) (July 2022)

**REFERENCES CITED IN THE DESCRIPTION**

**Patent documents cited in the description**

- KR 1020220049145

**Non-patent literature cited in the description**

- *Polymer*, 2005, vol. 46, 8872-8882